# EUROPEAN PATENT SPECIFICATION

(11) **EP 3 119 349 B1**
(45) Date of publication and mention of the grant of the patent: **01.04.2020**
(21) Application number: 15720860.4
(22) Date of filing: 22.04.2015
(51) Int. Cl.: A61C 17/22, A61C 17/34, H02J 7/02, H02J 7/04

(54) **ELECTRIC TOOTHBRUSH WITH A RECHARGEABLE BATTERY, AND INDUCTANCE CHARGER APPARATUS FOR USE WITH THE SAME**
ELEKTRISCHE ZAHNBÜRSTE MIT EINER WIEDERAUFLADBAREN BATTERIE UND INDUKTIONSLADEVORRICHTUNG ZUR VERWENDUNG DAMIT
BROSSE À DENTS ÉLECTRIQUE À BATTERIE RECHARGEABLE, ET APPAREIL DE CHARGEUR À INDUCTANCE POUR UTILISATION AVEC CELLE-CI

(30) Priority: 25.04.2014 JP 2014091835
(43) Date of publication of application: 25.01.2017
(73) Proprietor: Colgate-Palmolive Company, New York, NY 10022 (US); Omron Healthcare Co., Ltd., Kyoto 617-0002 (JP)
(72) Inventor: TOMORI, Kentaro, Muko-shi Kyoto 617-0002 (JP); TONE, Tadashi, Muko-shi Kyoto 617-0002 (JP); YOSHIDA, Hideaki, Muko-shi Kyoto 617-0002 (JP)
(74) Representative: Schicker, Silvia
(86) International application number: PCT/US2015/027059
(87) International publication number: WO 2015/164486

(56) References cited:
- EP-A1- 2 621 050
- AU-A- 5 086 779
- CN-U- 203 122 659
- CN-Y- 2 604 162
- DE-A1- 19 513 539
- JP-A- H0 888 942
- JP-A- H11 342 026
- US-A- 5 604 329
- US-A- 5 974 615
- US-A1- 2001 002 788
- US-A1- 2012 279 002
- US-A1- 2012 279 739
- US-B1- 6 766 548

## Description

### BACKGROUND

The electric toothbrush with a rechargeable battery in the market has many constructing parts. Such parts are, for example: a chassis for holding the rechargeable battery; a chassis for holding a DC motor; a bobbin with a coil for receiving power and charging the battery; a connecting rod with a number of parts for producing a vibration; and a stem with a bearing mounted therein for rotatably holding the connecting rod.

When the electric toothbrush is used for a long time, and the rechargeable battery becomes dull, the electric toothbrush is subject to a disposal. From the viewpoint of separating the trash, it is required to remove the rechargeable battery from the electric toothbrush before the disposal. With so many constructing parts combined in a sophisticated manner, the rechargeable battery is provided firmly inside the electric toothbrush. Therefore, the rechargeable battery cannot be easily removed from the electric toothbrush.

Furthermore, the electric toothbrush with a rechargeable battery uses a charger to electrically charge the rechargeable battery. The electric toothbrush, as well as the charger, is usually used in an environment with water and moisture. To avoid the charger from being damaged by water and moisture, the charger should be made with a water resistant structure, resulting in the increase of manufacturing cost.

Also, the electric toothbrush with the charger is sold and used in various regions in the world, such as in the U.S.A. and in Germany. For example, in the U.S.A., the plug to be connected to the commercial power source has two flat pins, but in Germany, the plug to be connected to the commercial power source has three pins. Therefore, the plugs connected to the charger should be prepared in different types according to the various regions in the world.

Prior art electric tooth brush is disclosed, for example, in U.S. Patent Application Publication No. US 2011/0041268 A1, and U.S. Patent Application Publication No. 2011/0010876 A1.

US 2012/279002 A1 describes a sonic toothbrush system with an electric motor, a brush shaft, and a drive assembly. The system includes an internal support structure formed by a chassis. An induction coil is wound around a bobbin and is located between the interior side of the flat base and a base end side of the chassis. A rechargeable battery pack is electrically coupled to the induction coil and supported in a pocket of the chassis on a brush end side of the charger coil.

JP H11 342026 A describes a battery charger charging a battery built in a toothbrush main body which is partitioned into a large chamber and a small chamber by a partition wall.

US 2012/279739 A1 describes an electric toothbrush with a case, a motor, an eccentric rod, a stem and an oral hygiene member. The motor is connected to a prescribed power source stored in the case.

### BRIEF SUMMARY

According to one embodiment, the invention may be an electric toothbrush with a rechargeable battery according to independent claim 1 or 12, the latter comprising: a chassis having a rechargeable battery receiving section and a bobbin section, which are aligned along a common axis in said order; a pair of connecting arms extending generally parallel to each other for connecting the rechargeable battery receiving section and the bobbin section, the pair of connecting arms, the rechargeable battery receiving section and the bobbin section being formed integrally; a rechargeable battery with tongue shaped terminals being accommodated in the rechargeable battery receiving section; and walls in the chassis for defining two openings to have an easy access to the tongue shaped terminals. At a time of disposal of the electric toothbrush, a user may remove the rechargeable battery by cutting the arms to remove the bobbin section, and cutting the tongue shaped terminals to remove the body of the battery.

Another example which is useful for understanding the invention can be an electric toothbrush with a rechargeable battery comprising: a chassis having a rechargeable battery receiving section and a bobbin section, which are aligned along a common axis in said order; a pair of connecting arms extending generally parallel to each other for connecting the rechargeable battery receiving section and the bobbin section, the pair of connecting arms, the rechargeable battery receiving section and the bobbin section being formed integrally; a rechargeable battery with tongue shaped terminals being accommodated in the rechargeable battery receiving section; and walls in the chassis for defining two openings to have an easy access to the tongue shaped terminals.

Another example which is useful for understanding the invention can be an inductive charger for charging an oral care implement comprising: a housing defining a housing cavity; a partition wall located within the housing that divides the housing cavity into a first chamber and a second chamber; a charging circuit comprising a circuit board, a first charging coil operably coupled to a first portion of the circuit board, and a pair of electrical power supply terminals, the charging circuit located within the housing cavity such that: (1) a first portion of the charging circuit is located within the first chamber, the first portion of the charging circuit comprising the first portion of the circuit board and the first charging coil; and (2) a second portion of the charging circuit is located within the second chamber, the second portion of the charging circuit comprising the pair of electrical power supply terminals; and a potting material in the first chamber that seals the first portion of the charging circuit located within the first chamber, the partition wall preventing the potting material from flowing into the second chamber to seal the pair of electrical power supply terminals of the second portion of the charging circuit.

A further example which is useful for understanding the invention can be a method of forming an inductive charger for charging an oral care implement, the method comprising: a) providing a housing defining a housing cavity, a partition wall located within the housing that divides the housing cavity into a first chamber and a second chamber; b); positioning a charging circuit comprising a circuit board, a first charging coil operably coupled to a first portion of the circuit board, and a pair of electrical power supply terminals in the housing cavity such that: (1) a first portion of the charging circuit is located within the first chamber, the first portion of the charging circuit comprising the first portion of the circuit board and the first charging coil; and (2) a second portion of the charging circuit is located within the second chamber, the second portion of the charging circuit comprising the pair of electrical power supply terminals; and c) flowing a potting material into the first chamber to seal the first portion of the charging circuit located within the first chamber, the partition wall preventing the potting material from flowing into the second chamber to seal the pair of electrical power supply terminals of the second portion of the charging circuit.

A yet further example which is useful for understanding the invention can be an electric toothbrush handle comprising: a body; a stem extending from the body, the stem configured to be repetitively coupled and decoupled to a refill head; a motor; a connecting rod operably coupled to the motor for rotation about an axis, the connecting rod comprising a first portion formed a first material and an eccentric portion formed of a second material that is different than the first material; the eccentric portion comprising a lower transverse section, an upper transverse section axially spaced from the lower transverse section, a first axial section extending downwardly from the lower transverse section, a second axial section extending upwardly from the upper transverse section, and an offset axial section extending between and connecting the upper and lower transverse sections; the first portion comprising a bore and an upper flange; and the first axial section located within the bore and the upper flange positioned above and overlying at least a portion of the lower transverse section.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is a perspective view of an electric toothbrush according to a preferred embodiment of the present invention.
Fig. 2A is an exploded view of the electric toothbrush shown in Fig. 1.
Fig. 2B is a perspective view of a connecting rod shown in Fig. 2A.
Fig. 2C is a cross-sectional view of a stem member inserted with the connecting rod.
Fig. 3 is a perspective view of a chassis together with an elongated jig before the insertion.
Fig. 4 is a perspective view of the chassis particularly showing a bobbin section.
Fig. 5 is a perspective view of the chassis together with an elongated jig after the insertion.
Fig. 6 is a cross-sectional view taken along a line VI-VI shown in Fig. 5.
Fig. 7 is a top plan view of the chassis mounted with an elongated circuit board, a rechargeable battery and a DC motor.
Fig. 8 is a cross-sectional view taken along a line VIII-VIII shown in Fig. 7.
Fig. 9 is a perspective view of the chassis particularly showing a motor receiving section.
Fig. 10 is a perspective view of the chassis shown in Fig. 7.
Fig. 11 is a top plan view of the chassis particularly showing the bobbin section being connected with a battery receiving section.
Fig. 12 is a perspective view of the chassis particularly showing the bobbin section being cut off from the battery receiving section.
Fig. 13 is a perspective view of a charger according to an example which is useful for understanding the present invention for charging electric power to the electric toothbrush shown in Fig. 1.
Fig. 14 is an exploded view of the charger shown in Fig. 13.
Fig. 15 is a perspective view of a housing of the charger shown in Fig. 13.
Fig. 16 is a plan view of the charger shown in Fig. 13.
Fig. 17 is a view similar to Fig. 16, but particularly showing a filler provided in the housing.
Figs. 18A, 18B and 18C are perspective views of different plugs connected to harnesses, respectively.

All drawing are schematic and not necessarily to scale.

### DETAILED DESCRIPTION

The following description of the preferred embodiment(s) is merely exemplary in nature and is in no way intended to limit the invention, its application, or uses.

As used throughout, ranges are used as shorthand for describing each and every value that is within the range. Any value within the range can be selected as the terminus of the range. In the event of a conflict in a definition in the present disclosure and that of a cited reference, the present disclosure controls.

In the description of embodiments disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

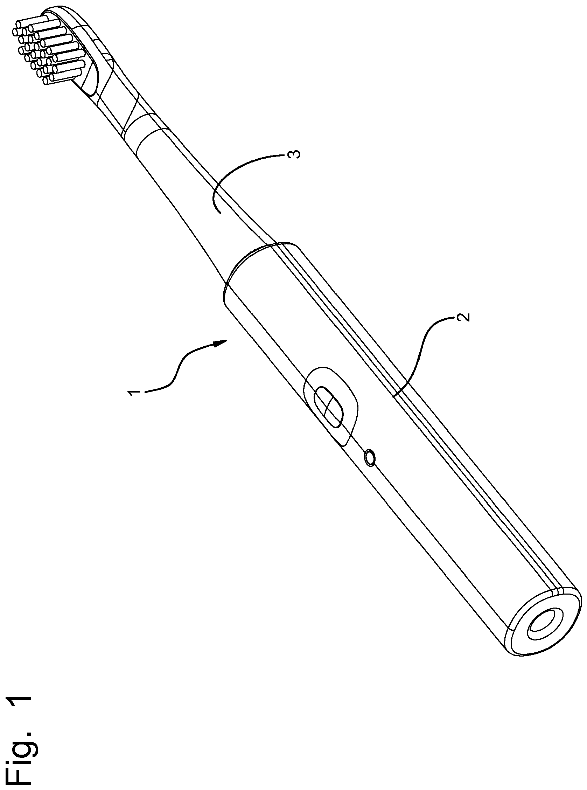

Referring to Fig. 1, an electric toothbrush 1 according to a preferred embodiment of the present invention is shown. The electric toothbrush 1 generally comprises an electric toothbrush handle 2 and a refill head 3.

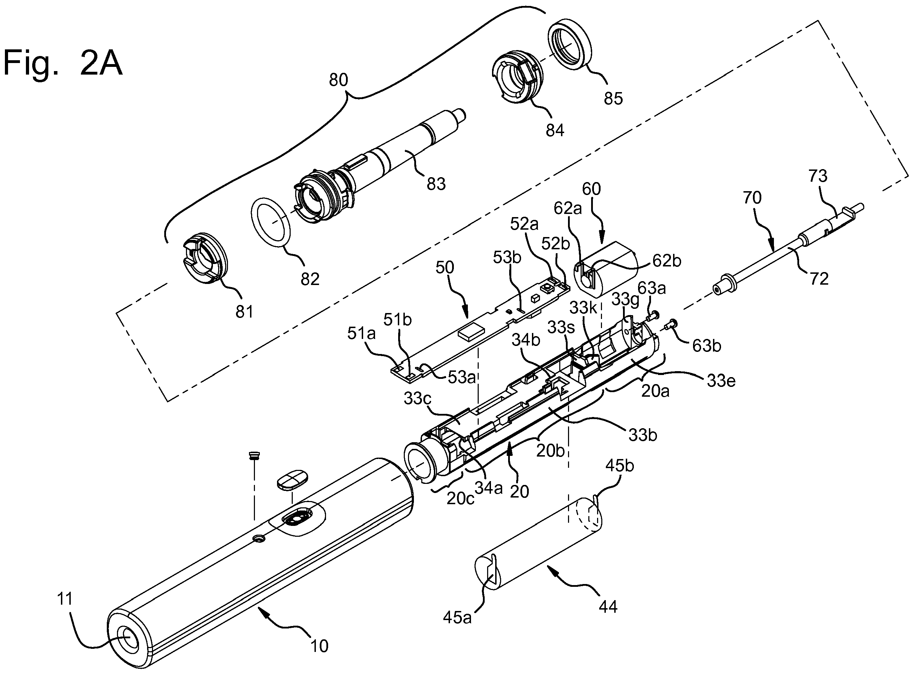

Referring to Fig. 2A, an exploded view of the electric toothbrush 1 is shown. Electric toothbrush 1 includes a body 10, a chassis 20, a rechargeable battery 44, an elongated circuit board 50, a DC motor 60, a connecting rod 70 and a stem arrangement 80. A replaceable brush (not shown) is to be mounted on the stem arrangement 80.

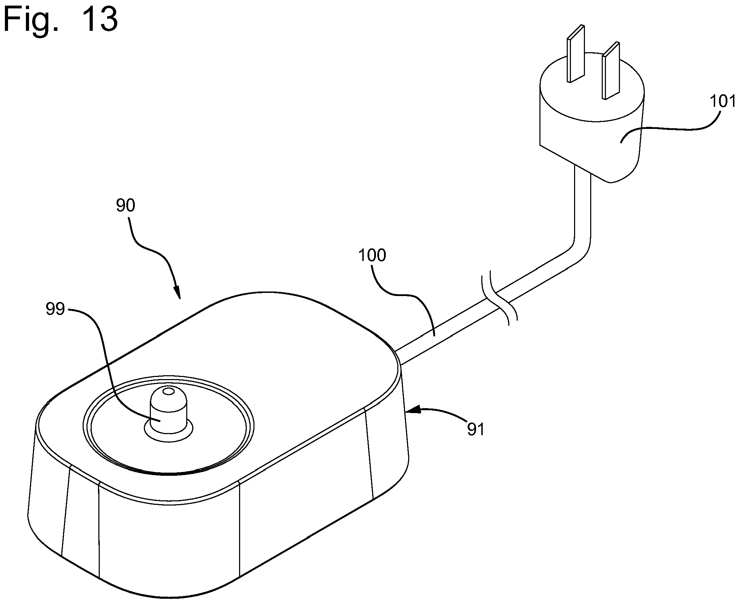

The body 10 has a recess 11 at its bottom end for receiving therein with a projection 99 formed in a charger 90. The charger 90 will be described later in connection with Fig. 13.

The rechargeable battery 44 has tongue shaped terminals 45a and 45b provided at opposite ends of a cylindrical body of battery 44, respectively, representing the plus terminal and the minus terminal, or vice versa. The tongue shaped terminals 45a and 45b are extending, not from the centers of the battery ends, but from deviated sides of the battery ends. The deviated sides are in the same side of an axis of the cylindrical battery. More specifically, the cylindrical rechargeable battery 44 has tongue shaped terminals 45a and 45b provided at the opposite ends of the battery, respectively, and extending in a direction outwardly from the circumferential edge of the battery, but offset from the radial direction. In other words, the tongue shaped terminals 45a and 45b extend in a direction within a plane which is perpendicular to an axis of the cylindrical battery 44, but not crossing the axis.

The stem arrangement 80 includes a bottom support member 81, a packing ring 82, a stem member 83, a top support member 84 and a top ring 85. The stem member 83 is made of a hollow tube for receiving the connecting rod 70.

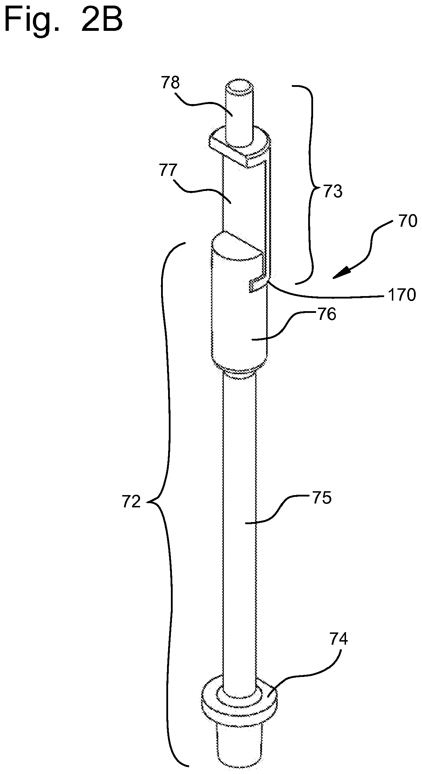

Referring to Fig. 2B, the connecting rod 70 include a first portion 72, which is formed of a synthetic resin, and a second portion 73, which is formed of a metal. The second potion 72 may be considered an eccentric portion. The synthetic resin portion 72 is integrally formed by a material called POM (polyoxymethylene) manufactured by, for example, POLYPLASTICS CO., LTD. JAPAN. The grade of the material POM is preferably NW-02, but other grades, such as M90-44 can be used.

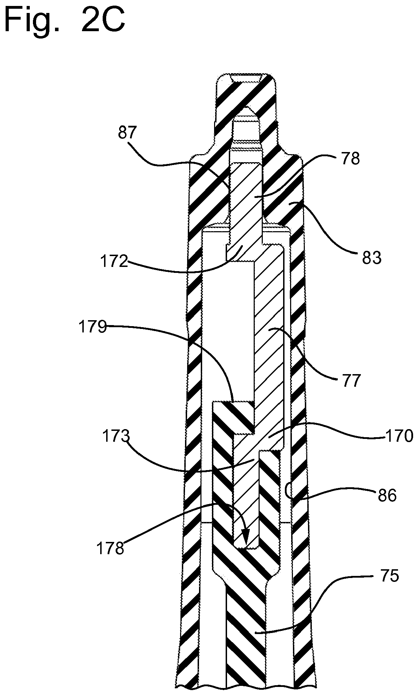

As shown in Figs. 2B and 2C, the synthetic resin portion 72 of the connecting rod 70 includes a collar portion 74 provided close to a bottom end, a resilient shaft portion 75 and a connecting portion 76 which are integrally formed by POM. The bottom end face of the synthetic resin portion 72 is formed with a recess to be engaged with a shaft of the DC motor 60.

The eccentric portion 73 of the connecting rod 70 includes a lower transverse section 170, an upper transverse section 172 axially spaced from the lower transverse section 170, a first axial section 173 extending downwardly from the lower transverse section 170, a second axial section 78 (also referred to as the axial shaft portion 78) extending upwardly from the upper transverse section 172, and an offset axial section 77 (also referred to as the eccentric shaft portion 77) extending between and connecting the upper and lower transverse sections 170, 172. The bottom end of the eccentric shaft portion 77 is firmly connected to the connecting portion 76 by molding and the upper end of the eccentric shaft portion 77 is provided with the axial shaft portion 78.

When the connecting rod 70 rotates about its axis by the DC motor 60, the eccentric shaft portion 77 generates a high frequency vibration which is transmitted to the stem arrangement 80 and to the brush. The resilient shaft portion 75 has a flexibility to receive the high frequency vibration of the eccentric shaft portion 77, and also to receive the bending force caused by the user pressing against the teeth.

Referring to Fig. 2C, the stem member 83, which is also formed by POM, has cylindrical cavity 86 and a recessed hole 87 formed at the end of the cylindrical cavity 86. The recessed hole 87 slidably receives the axial shaft portion 78, and the cylindrical cavity 86 accommodates therein the connecting rod 70 to be freely rotated in the cylindrical cavity 86. The recessed hole 87 serves as a bearing for freely holding the axial shaft portion 78. The connecting rod 70 freely rotates inside the cylindrical cavity 86 even under high frequency vibration. Since the recessed hole 87 serves as the bearing, it is not necessary to provide a separate bearing arrangement for rotatably holding the axial shaft portion 78.

As can also be seen, the first portion 72 comprises a bore 178 and an upper flange 179. The first axial section 173 of the eccentric portion 73 is located within the bore 178 and the upper flange 179 is positioned above and overlies at least a portion of the lower transverse section 170.

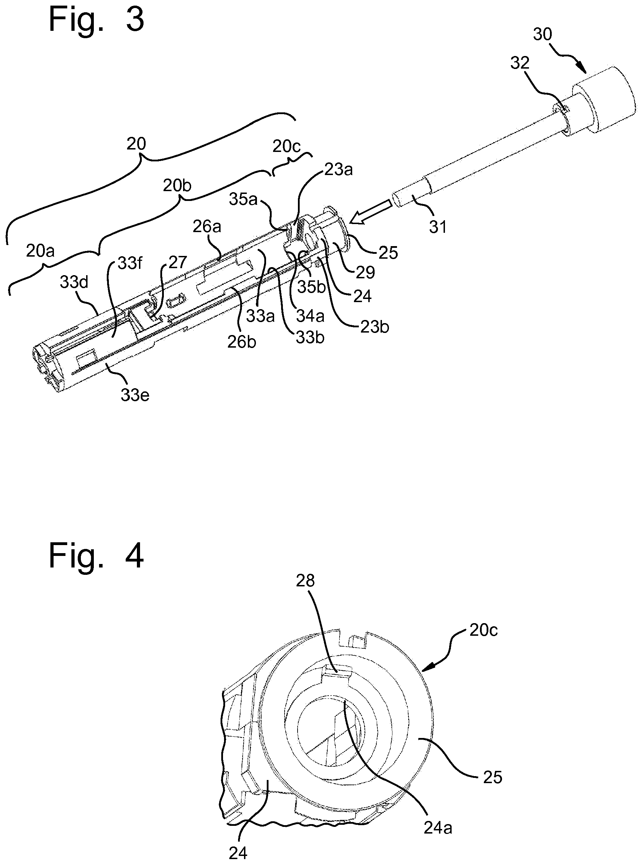

Referring to Fig. 3, a chassis 20 is shown which include a motor receiving section 20a, a battery receiving section 20b and a bobbin section 20c, which are integrally formed and are aligned along a common axis in said order.

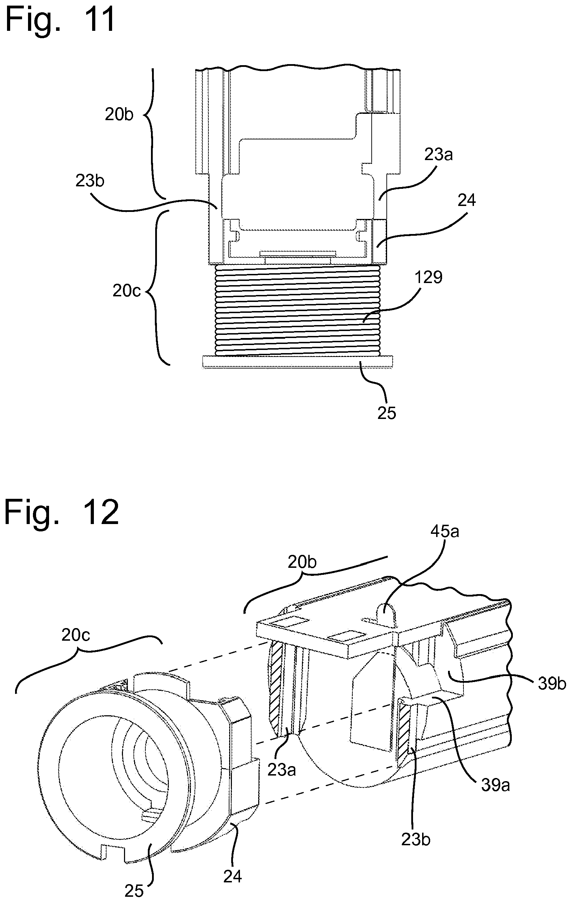

As best shown in Fig. 11, the bobbin section 20c and the battery receiving section 20b are connected by a pair of connecting arms 23a and 23b extending generally parallel to each other. Connecting arms 23a and 23b are also formed integrally with the bobbin section 20c and the battery receiving section 20b. Each of the connecting arms 23a and 23b has a thickness which is thinner than the walls forming other parts, such as the wall of the bobbin section 20c and the wall of the battery receiving section 20b. Preferably, the thickness of each of the connecting arms 23a and 23b is about 90% or less of the thickness of the walls. For example, the thickness of each of the connecting arms 23a and 23b is about 0.9mm or less, and the thickness of the walls is about 1.0mm-2.0mm. The connecting arms 23a and 23b are made so thin that they can be easily cut off, for example, by a cutting tool, such as by a knife or a pair of scissors when the electric toothbrush is to be disposed after a long period of use.

The electric toothbrush according to this embodiment is so designed that the rechargeable battery 44 cannot be replaced once it is accommodated, but can be recharged for a limited number of times. When the rechargeable battery 44 becomes dull after charging the rechargeable battery 44 for a certain number of times, a time comes to dispose the electric toothbrush. From the viewpoint of separating the trash, it is required to remove the rechargeable battery 44 from the electric toothbrush. To facilitate the removal of the rechargeable battery 44 according to the present embodiment, the bobbin section 20c is separated from the battery receiving section 20b. The removal of the rechargeable battery 44 will be explained in detail later in connection with Fig. 12.

Referring to Fig. 3, the bobbin section 20c includes a bobbin base 24, a flange 25 and a cylinder portion 29 located between the bobbin base 24 and the flange 25. Provided inside the hollow cylinder portion 29 is a projection 28, as shown in Fig. 4. The bobbin base 24 has a circle opening 24a for receiving a jig 30.

As shown in Fig. 3, the battery receiving section 20b is defined by elongated curved walls 33a and 33b opposing to each other, and an elongated center wall 33c located between the elongated curved walls 33a and 33b to form a U-shaped cross-sectional wall. The elongated curved walls 33a, 33b and elongated center wall 33c define an elongated opening for receiving the rechargeable battery 44. One end of the elongated opening for receiving the rechargeable battery 44 terminates at separation ribs 35a and 35b provided adjacent the bobbin base 24, and the other end of the elongated opening terminates at a recessed wall 27. The wall of the recessed wall 27 is formed perpendicularly to the common axis, and is located at one end of the battery receiving section away from the bobbin section. The rechargeable battery 44 is inserted between the ribs 35a, 35b and the recessed wall 27. The curved walls 33a and 33b are provided with gripping projections 26a and 26b, respectively, for gripping the rechargeable battery 44 at the cylindrical body of the battery. The elongated center wall 33c has at least two openings 34a and 34b, one opening 34a close to the bobbin section 20c and the another one opening 34b close to the motor receiving section 20a, for receiving therein tongue shaped terminals 45a and 45b extending from the rechargeable battery 44.

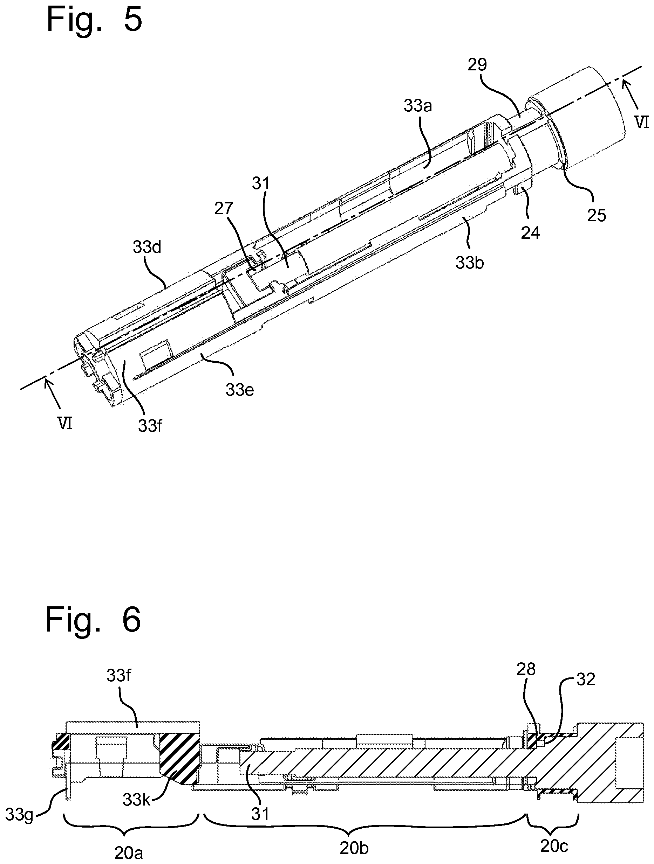

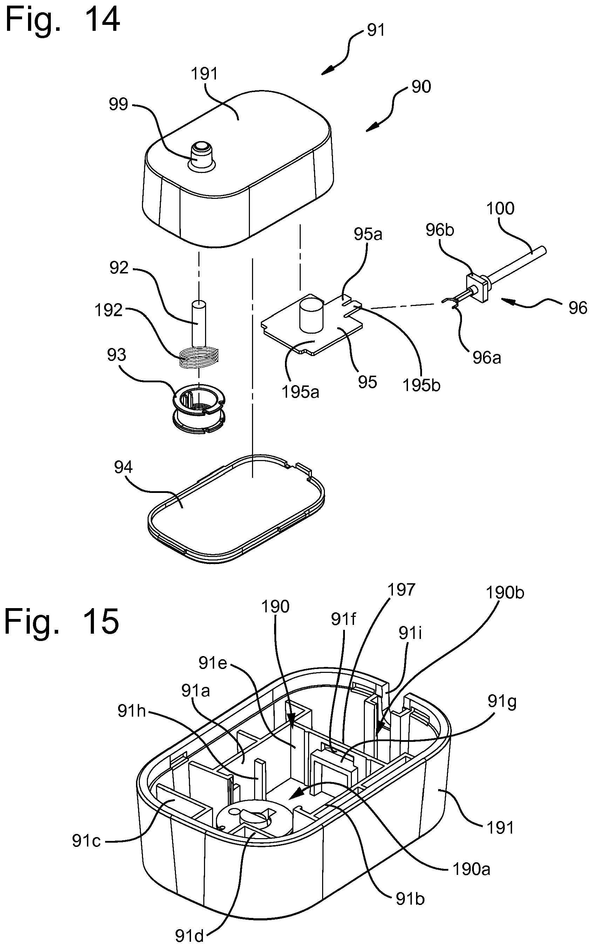

During the manufacturing process for winding a coil on the cylinder portion 29 of the bobbin section 20c, an elongated jig 30 having an elongated shaft 31 with a recess 32 formed at one end portion is inserted into the elongated opening through the circle opening 24a. The end of the elongated shaft 31 is fittingly inserted into the recessed wall 27, and a neck portion of the jig 30 where the recess 32 is formed is fittingly inserted into the cylinder portion 29 such that the projection 28 engages with recess 32, as shown in Figs. 5 and 6. One end of the jig 30 is connected to a driving shaft of a winding tool (not shown) for rotating the bobbin section 20c together with other sections 20a and 20b of chassis 20. Thus, a second charging coil 129 is wound on the bobbin section 20c. A first charging coil 192 will be described later in connection with Fig. 14.

Since the chassis 20 engages with the jig 30 at two separate points spaced apart in the axial direction of the chassis 20, i.e., one at the cylinder portion 29 and the other at the recessed wall 27, chassis 20 will be rotated stably and steadily with less wiggling motion of the motor receiving section 20a which is located away from the bobbin section 20c.

According to one conventional electric toothbrush, the bobbin section is provided separately from the battery receiving section so that only the bobbin section is mounted and rotated by the winding tool to easily wind the second charging coil 129 on the bobbin. The conventional winding tool has a conventional jig which is about the same length as the length of the bobbin section. According to the embodiment described above, since the bobbin section 20c is formed integrally with the battery receiving section 20b and the motor receiving section 20a, the second charging coil 129 cannot be wound easily by the conventional jig which is as short as the bobbin section 20c. Since the embodiment described above uses a long jig which can be firmly engaged with the chassis, the winding of the second charging coil 129 can be accomplished easily.

According to the embodiment described above, since the bobbin section 20c is formed integrally with the battery receiving section 20b and the motor receiving section 20a, the number of the manufacturing parts is reduced, and also the manufacturing process for connecting the bobbin section 20c to the battery receiving section 20b can be omitted.

As shown in Fig. 2A, a surface of the elongated center wall 33c opposite to the surface for receiving the rechargeable battery 44 is formed with a flat surface for receiving an elongated circuit board 50. One end of the elongated circuit board 50 is formed with a pair of electrodes 51a and 51b for electrical connection with opposite ends of the second charging coil 129 wound on the bobbin section 20c. The other end of the elongated circuit board 50 is formed with a pair of electrodes 52a and 52b for electrical connection respectively with terminals 62a and 62b extending from the DC motor 60. According to a preferred embodiment, the elongated circuit board 50 is formed with a pair of holes where the electrodes 52a and 52b are located so that hook type terminals 62a and 62b from the DC motor 60 can be easily connected mechanically. After the hook type terminals 62a and 62b are engaged into the holes, the electrodes 52a and 52b are soldered to the hook type terminals 62a and 62b.

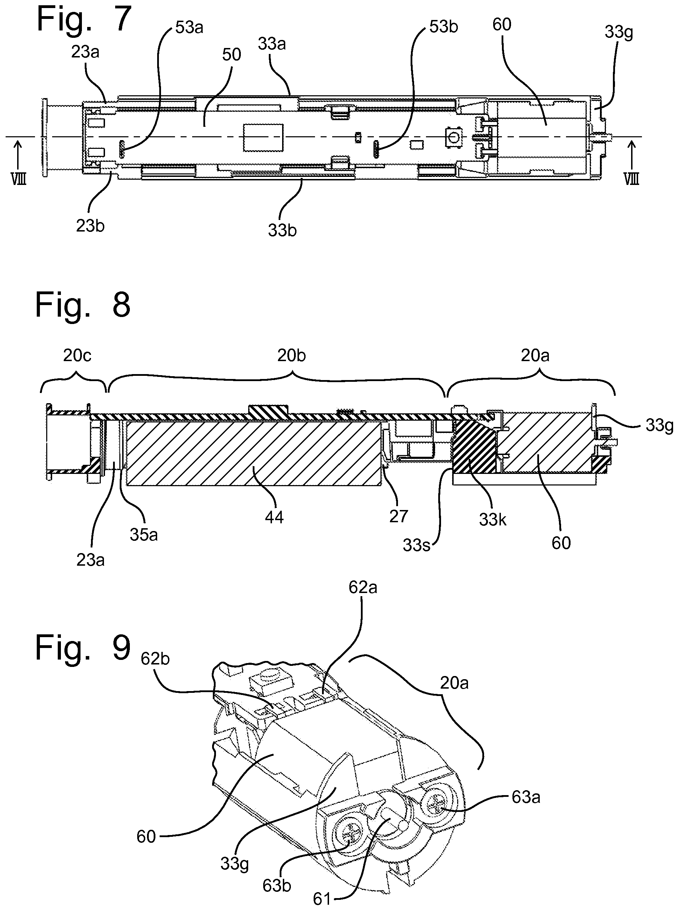

As best shown in Fig. 7, the elongated circuit board 50 is further formed with a pair of slits 53a and 53b which are located close to an elongated side of the circuit board 50 which is located close to the curved wall 33b. Slits 53a and 53b are provided for receiving the tongue shaped terminals 45a and 45b, respectively, provided on the rechargeable battery 44. Since the tongue shaped terminals 45a and 45b are located off the center of the battery 44, the battery 44 can be mounted only in one direction to allow the tongue shaped terminals 45a and 45b to be inserted into the slits 53a and 53b, respectively. Therefore, it is possible to avoid the mounting of the rechargeable battery 44 in a wrong direction. When the rechargeable battery 44 is mounted in the battery receiving section, the tongue shaped terminals 45a and 45b are located closer to one elongated curved wall 33b than the other elongated curved wall 33a.

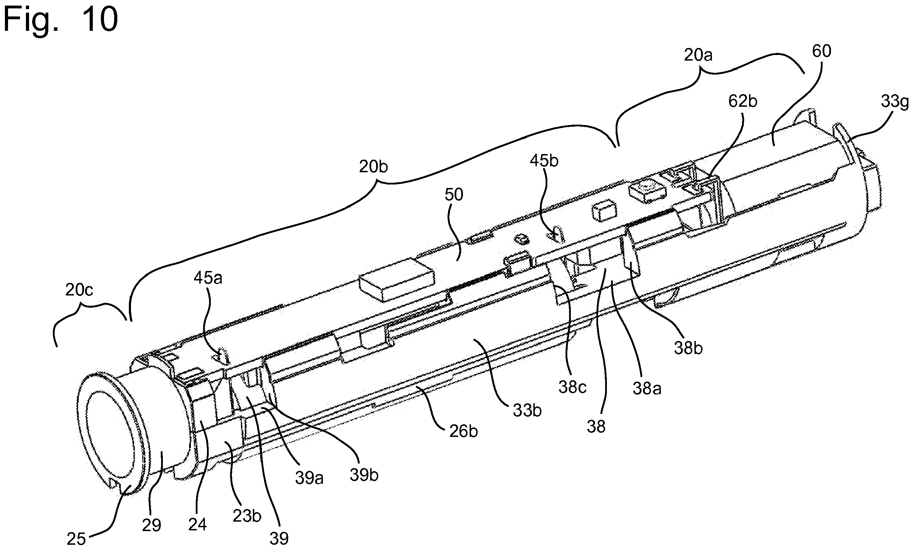

As shown in Fig. 10, the elongated curved wall 33b has two openings 38 and 39.

The opening 38 located adjacent tongue shaped terminal 45b of the inserted rechargeable battery 44, is defined by a horizontal wall 38a and opposite vertical walls 38b and 38c. The size of the opening 38 is 10.0mm or greater in width measured between vertical walls 38b and 38c and 3.0mm or greater in height measured between horizontal wall 38a and elongated circuit board 50. According to a preferred embodiment, opening 38 is made to be 10.6mm in width and 3.8mm in height.

The opening 39 located adjacent tongue shaped terminal 45a of the inserted rechargeable battery 44, is defined by a horizontal wall 39a and a vertical wall 39b and a wall of bobbin base 24. The size of the opening 39 is 3.0mm or greater in width measured between the wall 39b and the wall of bobbin base 24 and 3.0mm or greater in height measured between horizontal wall 39a and elongated circuit board 50. According to a preferred embodiment, opening 39 is made to be 4.0mm in width and 3.0mm in height.

Next, the removal of the rechargeable battery 44 at a time of disposal of the electric toothbrush is explained. Opening 38 is sufficiently wide to insert a cutting tool, such a knife or a pair of scissors. For example, the ends of the scissors is inserted in the opening 38 to cut off the tongue shaped terminal 45b just below the elongated circuit board 50. Opening 39 is provided for the same purpose as opening 38, but is not as wide as opening 38, because one side of the opening is restricted by the wall of bobbin base 24. Such a bobbin base 24 will be removed by the removal of the bobbin section 20c, as explained below.

As shown in Fig. 12, thin connecting arms 23a and 23b are cut by the scissors so as to remove the bobbin section 20c from the battery receiving section 20b. Then, a pair of scissors can be used to cut off the tongue shaped terminal 45a just below the elongated circuit board 50, such as along a dotted line shown in Fig. 12. When the tongue shaped terminals 45a and 45b are cut, the rechargeable battery 44 can be easily pulled out from the elongated opening.

Referring to Fig. 2A, the motor receiving section 20a is defined by curved walls 33d and 33e opposing to each other, and a center wall 33f located between the curved walls 33d and 33e to form a U-shaped cross-sectional wall. The direction of the U-shaped cross-sectional wall defined in the motor receiving section 20a is opposite to that of the U-shaped cross-sectional wall defined in the battery receiving section 20b. The curved walls 33d and 33e are extended portions of the elongated curved walls 33a and 33b, respectively. The center wall 33f is located on the side opposite to the elongated center wall 33c with respect to the axis of the chassis 20. The curved walls 33d, 33e and center wall 33f define an opening for receiving the DC motor 60. One end of the opening for receiving the DC motor 60 terminates at an end wall 33g provided remote from the battery receiving section 20b, and the other end of the opening terminates at three standing parallel blades extending from a separation wall 33s, as shown in Fig. 8. The separation wall 33s separates the motor receiving section 20a and the battery receiving section 20b. In Fig. 2A, only the center blade 33k is shown. Other blades are small in height and, therefore, cannot be seen in Fig. 2A. The end wall 33g generally has a U-shaped configuration, as shown in Fig. 9, so that the rotating shaft of the DC motor 60 can be easily accommodated in the end wall 33g. The end wall 33g is formed with screw holes for receiving screws 63a and 63b. The DC motor 60 is inserted between the end wall 33g and the three standing blades 33k. The motor 60 is firmly held at the end wall 33g by screws 63a and 63b.

Referring to Fig. 13, a charger 90 for electrically charging the rechargeable battery 44 is shown. The charger 90 includes a projection 99 which is inserted into the hole 11 when the electric toothbrush 1 is placed on the charger 90 in a standing manner. Extending from the charger 90 is a wire 100 which has a plug 101 at the end for the electrical connection with the commercial power source.

Referring to Fig. 14, an exploded view of the charger 90 is shown. The charge 90 generally includes a housing 91 which defines a housing cavity 190. In the example, the housing 91 is a two part assembly comprising an upper shell 191 and a cover 94 which, when coupled together, form an enclosure. The housing 91 comprises the projection 99.

The charger 90 also comprises a charging circuit that generally comprises a circuit board 95, a first charging coil 192 operably coupled to the circuit board 95, and a pair of electrical power supply terminals 193a, 193b that are also located on the circuit board 95. In the specific example, the first charging coil 192 is operably coupled to a first portion 195A of the circuit board 95 while the pair of electrical power supply terminals 193a, 193b are located on a second portion 195B of the circuit board 95. Of course, the charging circuit may comprise additional components as would be known to those of skill in the art. The charging circuit is located within the housing cavity 190 as further discussed below.

The charging circuit also comprises a magnetic (e.g., ferrite) core 92 inserted into the projection 99 and a bobbin 93 mounted about the ferrite core 92. The projection 99 extends from an outer surface of the housing 91 and the magnetic core 92 extends into the projection 99. When the charger 90 is fully assembled, the first charging coil 192 surrounds a lower portion of the magnetic core 92 and an upper portion of the magnetic core 92 protrudes from the first charging coil 192. The upper portion of the magnetic core 92 is located within the projection 99.

The circuit board 95 also comprises a bifurcated tongue 95a on which the pair of electrical power supply terminals 193a, 193b are located. In the example, each of the pair of electrical power supply terminals 193a, 193b is in the form of an exposed contact (or pad). A power supply cord 100 is also included that includes a harness 96. The power supply cord 100 further includes a plug 101 configured to be coupled to a power source at one end and a pair of electrically conductive elements 96a at the other end. In the example, the electrically conductive elements 96a are in the form of bifurcated exposed wire ends. In other examples, the electrically conductive elements 96a may be in the form of contacts or other electrical connection members. The harness 96 includes the bifurcated exposed wire ends 96a and a collar 96b.

Referring now to FIGS. 15-17 concurrently, partition walls 91a, 91b, 91c, 91d and 91e are provided within the housing cavity 190. Partition walls 91a, 91b, 91c, 91d and 91e divide the housing cavity 190 into a first chamber 190A and a second chamber 190B. The charging circuit is located within the housing cavity 190 such that a first portion of the charging circuit is located within the first chamber 190A and a second portion of the charging circuit is located within the second chamber 190B. Specifically, in the example, the first portion of the charging circuit comprises the first portion 195A of the circuit board 95, the bobbin 93, the ferrite core 92, and the first charging coil 192 while the second portion of the charging circuit comprises the second portion 195B of the circuit board 95 and the pair of electrical power supply terminals 193a, 193b. It should be noted that while a plurality of partition walls 91a, 91b, 91c, 91d and 91e are exemplified, in other examples, a single partition wall may be used to divide the housing cavity 190 into the first and second chambers 190A, 190B

A number of support members, which include ribs 91h and deck 91g, are provided for supporting the circuit board 95. The ribs 91h are on the walls 91a and 91b. The deck 91g is provided on the wall 91e. A rectangular through-hole 91f is formed in the wall 91e immediately above the deck 91g. A recess 91i is formed in the housing 91 at a location in front of the through-hole 91f.

The partition wall 91e comprises a through-hole 91f that forms a passageway between the first chamber 190A and the second chamber 190B. In the example, the through-hole 91f has a closed-geometry and is located below an upper edge 197 of the partition wall 91e. In other examples, the through-hole 91f may be in the form of a notch extending downward from the upper edge 197 of the partition wall 91e.

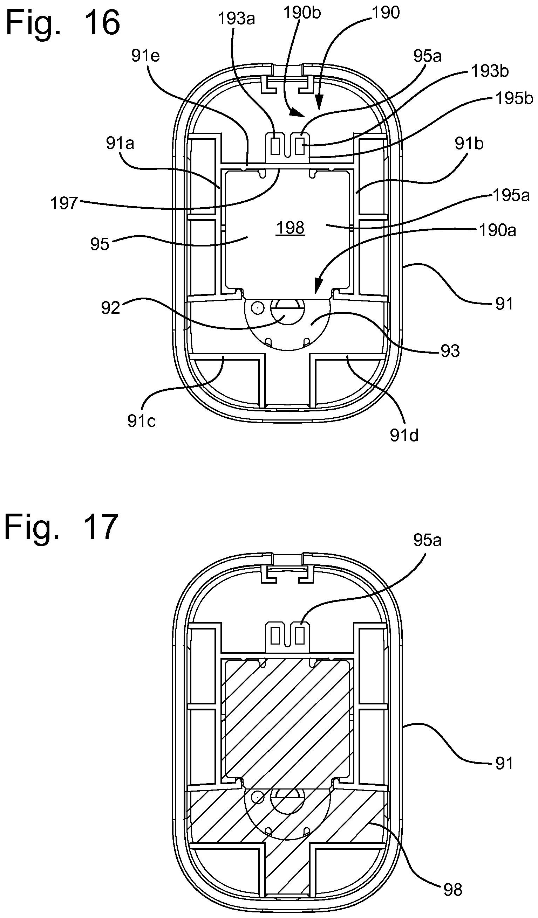

As can be seen, the circuit board 95 extends through the through-hole 91f such that the first portion 195A of the circuit board 95 is located in the first chamber 190A while the second portion 195B of the circuit board 95 is located in the second chamber 190B. The second portion 195B of the circuit board 95, in the example, comprises a bifurcated tongue 95a that is inserted through the through-hole 91f. Thus, the bifurcated tongue 95a is located on a side of the partition wall 91e that is opposite to the side at which the first charging coil 192 and magnetic core 92 are located. The first charging coil 192 is wound on the bobbin 93, and lines extending from the first charging coil 192 are connected to the circuit board 95. Once the charging circuit is positioned within the housing 91 as shown in FIG. 16, an uppermost surface 198 of the circuit board 95 is located below the upper edge 197 of the partition wall 91e.

After the bobbin 93 with the magnetic core 92 and the circuit board 95 are positioned as shown in Fig. 16, the first chamber 190A is filled with a potting material 98 by flowing the potting material 98 into the first chamber 190A. The partition wall 91e, however, prevents the potting material 98 from flowing into the second chamber 190B to seal (or otherwise cover or encase) the pair of electrical power supply terminals 193a, 193b of the second portion of the charging circuit.

Suitable potting materials include thermo-setting plastics, silicone rubber gels, and liquid state synthetic resins, which becomes solid state after a predetermined time and/or treatment. In Fig. 17, the potting material 98 is shown by shaded lines. By filling the first chamber 190A with the potting material 98, the first portion of the charging circuit, which includes the bobbin 93, the magnetic core 92, the first charging coil 192, and the first portion 195A of the circuit board 95, are sealed, thereby preventing damage from moisture and/or water.

Preferably, before placing the circuit board 95, a first sealant, such as a bonding material, is placed over the deck 91g to firmly hold the circuit board 95 in the position shown in Fig. 16. In addition to bonding, the first sealant tightly seals the through-hole 95.

After the potting material 98 turns into the solid state, the power supply cable 100 having the harness 96 at one end and the plug 101 at the other end is connected to the charging circuit. Specifically, the pair of electrically conductive elements 96a are electrically connected to the pair of electrical power supply terminals 193a, 193b by a soldering procedure. The collar 96b of the harness 96 is fittingly inserted into the recess 91i. After soldering, a second sealant, which may be a bonding material, is applied so as to seal the electrical connection between the pair of electrically conductive elements 96a and the pair of electrical power supply terminals 193a, 193b. By placing the bonding material over this electrical connection, damage by moisture or water is prevented. Thereafter, the cover 94 is coupled to the upper shell 191 to form the housing.

Since the charger 90 as described above is formed with a first chamber 190A that is separated from the second chamber 190B by the partition walls 91a, 91b, 91c, 91d and 91e, and the main components of the charging circuit are located in the first chamber 190A, the potting material 98 is added, not entirely in the housing 91, but only in the first chamber 190A at this time. Therefore, the amount of the potting material 98 that needs to be used can be reduced.

However, because the electrical power supply terminals 193a, 193b are located in the second chamber 190B, the power supply cable 100 can be electrically connected to the electrical power supply terminals 193a, 193b after the potting material 98 is hardened. Thus, it is possible prepare and store the charger 90 without a power supply cable 100, and thereafter, upon demand, a desired power supply cable 100 can be selected from various types of power supply cable 100. The advantage of this arrangement is further explained below.

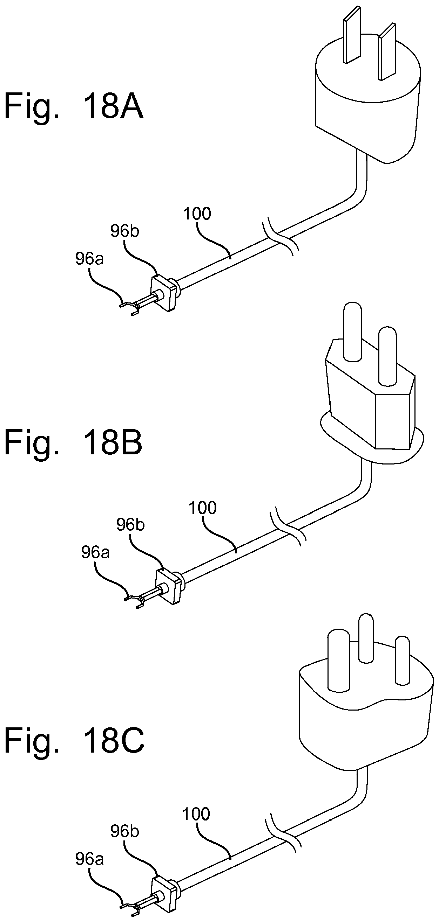

During the manufacturing process of the charger 90, it is possible to keep a stock of the chargers 90 without connecting the power supply cables 100. Power supply cables 100 with different types of plugs, such as shown in Figs. 18A, 18B and 18C, are stocked separately. The plug type varies according to different regions in the world. The connection of the power supply cables 100 to the chargers 90 can be done according to the demand from various regions. In this manner, it is possible to avoid over manufacturing of the chargers 90 with a particular type of plug.

As used throughout, ranges are used as shorthand for describing each and every value that is within the range. Any value within the range can be selected as the terminus of the range. In the event of a conflict in a definition in the present disclosure and that of a cited reference, the present disclosure controls.

While the invention has been described with respect to specific examples including presently preferred modes of carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the scope of the invention should be construed broadly as set forth in the appended claims.

## Claims

1. An electric toothbrush (1) with a rechargeable battery (44) comprising:
a chassis (20) having a motor receiving section (20a), a rechargeable battery receiving section (20b) and a bobbin section (20c), which are integrally formed to each other and are aligned along a common axis in said order;
a DC motor (60) accommodated in the motor receiving section (20a);
a rechargeable battery (44) accommodated in the rechargeable battery receiving section (20b); and
a coil (129) wound on the bobbin section (20c);
wherein the rechargeable battery receiving section (20b) and the bobbin section (20c) are connected to each other by a pair of connecting arms (23a, 23b) extending generally parallel to each other; and
wherein a thickness of each of the connecting arms (23a, 23b) is thinner than a wall forming the rechargeable battery receiving section (20b) and the bobbin section (20c).

2. The electric toothbrush (1) according to claim 1, wherein the bobbin section (20c) has a circle opening (24a), and the rechargeable battery receiving section (20b) has a recessed wall (27) such that a wall of the recessed wall (27) is formed perpendicularly to the common axis and is formed at one end away from the bobbin section (20c), wherein the circle opening (24a) of the bobbin section (20c) is adapted to fittingly engage with an elongated jig (30) provided in a tool for winding the coil (129) on the bobbin section (20c), and a recess (32) of the recessed wall (27) of the rechargeable battery receiving section (20b) is adapted to fittingly receive an end of the elongated jig (30).

3. The electric toothbrush (1) according to claim 1, further comprising an elongated circuit board (50) mounted on the rechargeable battery receiving section (20b).

4. The electric toothbrush (1) according to claim 3, wherein the DC motor (60) has a pair of hook type terminals (62a, 62b) which are connected to the elongated circuit board (50).

5. The electric toothbrush (1) according to claim 1, wherein the DC motor (60) is firmly connected to the chassis (20) by at least two screws (63a, 63b).

6. The electric toothbrush (1) according to claim 1, wherein the rechargeable battery receiving section (20b) of the chassis (20) is formed with at least one pair of gripping projections (26a, 26b) for gripping the rechargeable battery (44) at a cylindrical body.

7. The electric toothbrush (1) according to claim 1, wherein the rechargeable battery (44) has a cylindrical shape, and has first and second tongue shaped terminals (45a, 45b) extending from opposite ends of the battery (44), respectively, in a direction within a plane which is perpendicular to an axis of the cylindrical battery (44), but not crossing the axis.

8. The electric toothbrush (1) according to claim 7, wherein the rechargeable battery section (20b) of the chassis (20) is formed by first and second elongated curved walls (33a, 33b) opposing to each other, and an elongated center wall (33c) located between the first and second elongated curved walls (33a, 33b) to define an elongated opening for receiving the rechargeable battery (44) such that the first and second tongue shaped terminals (45a, 45b) are located closer to the second elongated curved wall (33b) than the first elongated curved wall (33a).

9. The electric toothbrush (1) according to claim 8, wherein the second elongated curved wall (33b) is formed with a first opening (39) adjacent a location where the first tongue shaped terminal (45a) exists, and a second opening (38) adjacent a location where the second tongue shaped terminal (45b) exists, said first and second openings (39, 38) being formed for inserting a cutting tool to cut off the first and second tongue shaped terminals (45a, 45b).

10. The electric toothbrush (1) according to claim 8, further comprising an elongated circuit board (50) mounted on the elongated center wall (33c) on a side opposite to a side where the rechargeable battery (44) exists.

11. The electric toothbrush (1) according to claim 8, wherein the elongated circuit board (50) is formed with first and second slits (53a, 53b) for receiving ends of the first and second tongue shaped terminals (45a, 45b).

12. An electric toothbrush (1) with a rechargeable battery (44) comprising:
a chassis (20) having a rechargeable battery receiving section (20b) and a bobbin section (20c), which are aligned along a common axis in said order;
a pair of connecting arms (23a, 23b) extending generally parallel to each other for connecting the rechargeable battery receiving section (20b) and the bobbin section (20c), the pair of connecting arms (23a, 23b), the rechargeable battery receiving section (20b) and the bobbin section (20c) being formed integrally;
a rechargeable battery (44) with tongue shaped terminals (45a, 45b) being accommodated in the rechargeable battery receiving section (20b); and
walls (33a, 33b) in the chassis (20) for defining two openings (38, 39) to have an easy access to the tongue shaped terminals (45a, 45b).

## Patentansprüche

1. Elektrische Zahnbürste (1) mit einer aufladbaren Batterie (44), umfassend:
ein Gehäuse (20), das einen Motoraufnahmeabschnitt (20a), einen Aufnahmeabschnitt für aufladbare Batterien (20b) und einen Spulenabschnitt (20c) aufweist, die integral miteinander gebildet sind und entlang einer gemeinsamen Achse in der genannten Reihenfolge ausgerichtet sind;
einen Gleichstrommotor (60), der in dem Motoraufnahmeabschnitt (20a) aufgenommen ist;
eine aufladbare Batterie (44), die in dem Aufnahmeabschnitt für aufladbare Batterien (20b) aufgenommen ist; und
eine Spule (129), die auf den Spulenabschnitt (20c) gewickelt ist;
wobei der Aufnahmeabschnitt für aufladbare Batterien (20b) und der Spulenabschnitt (20c) miteinander über ein Paar von Verbindungsarmen (23a, 23b), die sich im Wesentlichen parallel zueinander erstrecken, verbunden sind; und
wobei eine Stärke eines jeden der Verbindungsarme (23a, 23b) dünner als eine Wand ist, die den Aufnahmeabschnitt für aufladbare Batterien (20b) und den Spulenabschnitt (20c) bildet.

2. Elektrische Zahnbürste (1) nach Anspruch 1, wobei der Spulenabschnitt (20c) eine Kreisöffnung (24a) aufweist, und der Aufnahmeabschnitt für aufladbare Batterien (20b) eine ausgenommene Wand (27) aufweist, so dass eine Wand der ausgenommenen Wand (27) senkrecht zur gemeinsamen Achse gebildet ist und an einem Ende weg von dem Spulenabschnitt (20c) gebildet ist, wobei die Kreisöffnung (24a) des Spulenabschnitts (20c) dazu ausgestaltet ist, passend in eine längliche Spannvorrichtung (30) einzugreifen, die in einem Werkzeug zum Wickeln der Spule (129) auf dem Spulenabschnitt (20c) bereitgestellt ist, und wobei eine Ausnehmung (32) der ausgenommenen Wand (27) des Aufnahmeabschnitts für aufladbare Batterien (20b) dazu ausgestaltet ist, passend ein Ende der länglichen Spannvorrichtung (30) aufzunehmen.

3. Elektrische Zahnbürste (1) nach Anspruch 1, die ferner eine längliche Leiterplatte (50) umfasst, die an dem Aufnahmeabschnitt für aufladbare Batterien (20b) montiert ist.

4. Elektrische Zahnbürste (1) nach Anspruch 3, wobei der Gleichstrommotor (60) ein Paar von hakenartigen Klemmen (62a, 62b) aufweist, die mit der länglichen Leiterplatte (50) verbunden sind.

5. Elektrische Zahnbürste (1) nach Anspruch 1, wobei der Gleichstrommotor (60) fest mit dem Gehäuse (20) über wenigstens zwei Schrauben (63a, 63b) verbunden ist.

6. Elektrische Zahnbürste (1) nach Anspruch 1, wobei der Aufnahmeabschnitt für aufladbare Batterien (20b) des Gehäuses (20) mit wenigstens einem Paar von Greifvorsprüngen (26a, 26b) zum Greifen der aufladbaren Batterie (44) an einem zylindrischen Körper gebildet ist.

7. Elektrische Zahnbürste (1) nach Anspruch 1, wobei die aufladbare Batterie (44) eine zylindrische Form aufweist und eine erste und eine zweite zungenförmige Klemme (45a, 45b) aufweist, die sich jeweils von entgegengesetzten Enden der Batterie (44) in eine Richtung innerhalb einer Ebene erstrecken, die senkrecht zu einer Achse der zylindrischen Batterie (44) ist, aber die Achse nicht kreuzt.

8. Elektrische Zahnbürste (1) nach Anspruch 7, wobei der Abschnitt für aufladbare Batterien (20b) des Gehäuses (20) durch eine erste und eine zweite längliche gekrümmte Wand (33a, 33b), die einander gegenüberliegen, und eine längliche zentrale Wand (33c), die zwischen der ersten und der zweiten länglichen gekrümmten Wand (33a, 33b) positioniert ist, gebildet ist, um eine längliche Öffnung zur Aufnahme der aufladbaren Batterie (44) zu definieren, so dass die erste und die zweite zungenförmige Klemme (45a, 45b) näher an der zweiten länglichen gekrümmten Wand (33b) als an der ersten länglichen gekrümmten Wand (33a) positioniert sind.

9. Elektrische Zahnbürste (1) nach Anspruch 8, wobei die zweite längliche gekrümmte Wand (33b) mit einer ersten Öffnung (39) angrenzend an eine Stelle gebildet ist, an welcher die erste zungenförmige Klemme (45a) besteht, und einer zweiten Öffnung (38) angrenzend an eine Stelle, an welcher die zweite zungenförmige Klemme (45b) besteht, wobei die erste und die zweite Öffnung (39, 38) zum Einfügen eines Schneidwerkzeugs zum Abschneiden der ersten und zweiten zungenförmigen Klemme (45a, 45b) gebildet sind.

10. Elektrische Zahnbürste (1) nach Anspruch 8, die ferner eine längliche Leiterplatte (50) umfasst, die an der länglichen zentralen Wand (33c) auf einer Seite montiert ist, die einer Seite gegenüberliegt, an welcher die aufladbare Batterie (44) besteht.

11. Elektrische Zahnbürste (1) nach Anspruch 8, wobei die längliche Leiterplatte (50) mit einem ersten und einem zweiten Schlitz (53a, 53b) zur Aufnahme von Enden der ersten und der zweiten zungenförmigen Klemme (45a, 45b) gebildet ist.

12. Elektrische Zahnbürste (1) mit einer aufladbaren Batterie (44), umfassend:
ein Gehäuse (20), das einen Aufnahmeabschnitt für aufladbare Batterien (20b) und einen Spulenabschnitt (20c) aufweist, die entlang einer gemeinsamen Achse in der genannten Reihenfolge ausgerichtet sind;
ein Paar von verbindenden Armen (23a, 23b), die sich im Wesentlichen parallel zueinander erstrecken, um den Aufnahmeabschnitt für aufladbare Batterien (20b) und den Spulenabschnitt (20c) zu verbinden, wobei das Paar von Verbindungsarmen (23a, 23b), der Aufnahmeabschnitt für aufladbare Batterien (20b) und der Spulenabschnitt (20c) integral gebildet sind;
eine aufladbare Batterie (44) mit zungenförmigen Klemmen (45a, 45b), die in dem Aufnahmeabschnitt für aufladbare Batterien (20b) aufgenommen ist; und
Wände (33a, 33b) im Gehäuse (20) zur Definition von zwei Öffnungen (38, 39), um leichten Zugriff auf die zungenförmigen Klemmen (45a, 45b) zu haben.

## Revendications

1. Brosse à dents électrique (1) à batterie rechargeable (44), comprenant :
un châssis (20) comportant une section de réception de moteur (20a), une section de réception de batterie rechargeable (20b) et une section d'enroulement (20c), qui sont formées d'un seul tenant l'une avec l'autre et sont alignées le long d'un axe commun dans ledit ordre ;
un moteur à courant continu (60) logé dans la section de réception de moteur (20a) ;
une batterie rechargeable (44) logée dans la section de réception de batterie rechargeable (20b) ; et
une bobine (129) enroulée sur la section d'enroulement (20c) ;
dans laquelle la section de réception de batterie rechargeable (20b) et la section d'enroulement (20c) sont reliées l'une à l'autre par une paire de bras de liaison (23a, 23b) s'étendant généralement parallèlement l'un à l'autre ; et
dans laquelle une épaisseur de chacun des bras de liaison (23a, 23b) est plus mince qu'une paroi formant la section de réception de batterie rechargeable (20b) et la section d'enroulement (20c).

2. Brosse à dents électrique (1) selon la revendication 1, dans laquelle la section d'enroulement (20c) comporte une ouverture circulaire (24a) et la section de réception de batterie rechargeable (20b) comporte une paroi évidée (27) de sorte qu'une paroi de la paroi évidée (27) est formée perpendiculairement à l'axe commun et est formée au niveau d'une extrémité éloignée de la section d'enroulement (20c), dans laquelle l'ouverture circulaire (24a) de la section d'enroulement (20c) est conçue pour venir en prise de manière ajustée avec un gabarit allongé (30) prévu dans un outil pour enrouler la bobine (129) sur la section d'enroulement (20c), et un évidement (32) de la paroi évidée (27) de la section de réception de batterie rechargeable (20b) est conçu pour recevoir de manière ajustée une extrémité du gabarit allongé (30).

3. Brosse à dents électrique (1) selon la revendication 1, comprenant en outre une carte de circuit allongée (50) montée sur la section de réception de batterie rechargeable (20b).

4. Brosse à dents électrique (1) selon la revendication 3, dans laquelle le moteur à courant continu (60) comporte une paire de bornes de type crochet (62a, 62b) qui sont reliées à la carte de circuit allongée (50).

5. Brosse à dents électrique (1) selon la revendication 1, dans laquelle le moteur à courant continu (60) est fermement relié au châssis (20) par au moins deux vis (63a, 63b).

6. Brosse à dents électrique (1) selon la revendication 1, dans laquelle la section de réception de batterie rechargeable (20b) du châssis (20) est formée avec au moins une paire de saillies de préhension (26a, 26b) pour saisir la batterie rechargeable (44) au niveau d'un corps cylindrique.

7. Brosse à dents électrique (1) selon la revendication 1, dans laquelle la batterie rechargeable (44) présente une forme cylindrique, et comporte des première et seconde bornes en forme de languette (45a, 45b) s'étendant depuis les extrémités opposées de la batterie (44), respectivement, dans une direction dans un plan qui est perpendiculaire à un axe de la batterie cylindrique (44), mais ne traversant pas l'axe.

8. Brosse à dents électrique (1) selon la revendication 7, dans laquelle la section de batterie rechargeable (20b) du châssis (20) est formée par des première et seconde parois incurvées allongées (33a, 33b) opposées l'une à l'autre, et une paroi centrale allongée (33c) située entre les première et seconde parois incurvées allongées (33a, 33b) pour définir une ouverture allongée pour recevoir la batterie rechargeable (44) de sorte que les première et seconde bornes en forme de languette (45a, 45b) sont situées plus près de la seconde paroi incurvée allongée (33b) que de la première paroi incurvée allongée (33a).

9. Brosse à dents électrique (1) selon la revendication 8, dans laquelle la seconde paroi incurvée allongée (33b) est formée avec une première ouverture (39) adjacente à un emplacement où se situe la première borne en forme de languette (45a), et une seconde ouverture (38) adjacente à un emplacement où se situe la seconde borne en forme de languette (45b), lesdites première et seconde ouvertures (39, 38) étant formées pour insérer un outil de découpe pour couper les première et seconde bornes en forme de languette (45a, 45b).

10. Brosse à dents électrique (1) selon la revendication 8, comprenant en outre une carte de circuit allongée (50) montée sur la paroi centrale allongée (33c) sur un côté opposé à un côté où se situe la batterie rechargeable (44).

11. Brosse à dents électrique (1) selon la revendication 8, dans laquelle la carte de circuit imprimé allongée (50) est formée avec des première et seconde fentes (53a, 53b) pour recevoir les extrémités des première et seconde bornes en forme de languette (45a, 45b).

12. Brosse à dents électrique (1) à batterie rechargeable (44), comprenant :
un châssis (20) comportant une section de réception de batterie rechargeable (20b) et une section d'enroulement (20c), qui sont alignées le long d'un axe commun dans ledit ordre ;
une paire de bras de liaison (23a, 23b) s'étendant généralement parallèlement l'un à l'autre pour relier la section de réception de batterie rechargeable (20b) et la section d'enroulement (20c), la paire de bras de liaison (23a, 23b), la section de réception de batterie rechargeable (20b) et la section d'enroulement (20c) étant formées d'un seul tenant ;
une batterie rechargeable (44) dotée de bornes en forme de languette (45a, 45b) étant logée dans la section de réception de batterie rechargeable (20b) ; et
des parois (33a, 33b) dans le châssis (20) pour définir deux ouvertures (38, 39) pour avoir un accès facile aux bornes en forme de languette (45a, 45b).
